# EUROPEAN PATENT APPLICATION

(11) **EP 4 617 736 A1**
(43) Date of publication of application: **17.09.2025**
(21) Application number: 25161114.1
(22) Date of filing: 28.02.2025
(51) Int. Cl.: G01W 1/10, G06N 20/00, G06N 3/08

(54) **METHOD OF PREDICTING MICROCLIMATE CONDITIONS BASED ON GLOBAL WEATHER**

(30) Priority: 28.02.2024 US 202418590363
(71) Applicant: Disney Enterprises, Inc., Burbank, CA 91521 (US)
(72) Inventor: Hale, Gregory Brooks, Orlando (US); Markowitz, Gary David, San Juan Capistrano (US); Wilkinson, Clifford, Clermont (US); Eaton, Jeremy, Winter Garden (US); Gilmore, David B., Orlando (US)
(74) Representative: Jarrett, Daniel Phillip

(57) **Abstract**

A method of training a microclimate machine learning model includes: receiving a regional weather data for a microclimate environment; detecting one or more microclimate conditions via one or more sensors positioned within the microclimate environment; determining one or more microclimate area characteristic of the microclimate environment at the time of the detected one or more microclimate conditions; generating the microclimate machine learning model based on the regional weather data, the one or more microclimate conditions, and the one or more microclimate area characteristic.

## Description

### BACKGROUND

Weather forecasting, while generally accurate, can be unreliable in very local (e.g., microclimate) conditions as such forecasting systems do not predict what the weather, specifically the heat stress conditions, wind elements, humidity, cold, and direct/partial sun exposure, etc. will be on a microclimate scale. Such microclimate conditions can be considerably more extreme than even the most accurate regional or city forecasts can predict. For example, a weather forecast for a city may estimate a high temperature will be 90°F with 45% relative humidity, predict a heat exposure index of a particular value, and a 15% chance of rain, etc. However, such a broad area forecast does not account for the local microclimate of a construction worker in a downtown urban area surrounded by asphalt, parked cars with hot engines, traffic emitting hot exhaust, crowds of people walking on a nearby sidewalk, etc., all of which may increase the temperature and heat stress experienced by the worker. In addition, tall buildings may reflect light from the sun and block the prevailing wind, further exacerbating hot weather. Solutions are needed to accurately predict microclimate conditions.

### BRIEF SUMMARY

Aspects and features of the present disclosure are set out in the appended claims.

### OVERVIEW OF DISCLOSURE

In one example, a method of predicting a microclimate condition includes: receiving, by a processing element, regional weather data; translating, by the processing element by utilizing a microclimate model, the regional weather data into the microclimate condition; and generating, by the processing element, an alert based to the microclimate condition.

Optionally, in some embodiments, the microclimate model analyzes the regional weather data and one or more microclimate area characteristics of a microclimate area to translate the regional weather data into the microclimate condition for the microclimate area.

Optionally, in some embodiments, the one or more microclimate area characteristic include: a material property; a shading; a windbreak; a presence of a heat source; a reflectivity, a transmissibility, or an absorptivity of light of any wavelength; a heat capacity; a type or amount of paving; a presence or absence of vegetation; a human or animal population; a shape of an object, a features of a surface, or water.

Optionally, in some embodiments, the material property includes a surface property.

Optionally, in some embodiments, the one or more microclimate conditions includes one or more of: a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.

Optionally, in some embodiments, the pollutant is one or more of: an amount of a particulate matter, a nitrogen and oxygen compound, a sulfur compound, ozone, a hydrocarbon, carbon dioxide, or carbon monoxide.

Optionally, in some embodiments, the alert includes a mitigation action configured to mitigate the predicted microclimate condition.

Optionally, in some embodiments, the alert includes a message configured to be displayed on a user device.

Optionally, in some embodiments, the regional weather data includes at least one of a forecast or a regional weather condition.

Optionally, in some embodiments, the regional weather condition includes one or more of: a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.

Optionally, in some embodiments, the regional weather condition includes a real time or near real-time condition.

Optionally, in some embodiments, the regional weather condition includes a historical condition.

Optionally, in some embodiments, the method includes: receiving, by the processing element, local weather data from a sensor located in the microclimate area; modifying the microclimate model, by the processing element, based on the local weather data.

Optionally, in some embodiments, the microclimate model includes an artificial intelligence or machine learning algorithm.

In one embodiment, training a microclimate machine learning model includes: receiving a regional weather data for a microclimate environment; detecting one or more microclimate conditions via one or more sensors positioned within the microclimate environment; determining one or more microclimate area characteristic of the microclimate environment at the time of the detected one or more microclimate conditions; generating the microclimate machine learning model based on the regional weather data, the one or more microclimate conditions, and the one or more microclimate area characteristic.

Optionally, in some embodiments, the one or more microclimate area characteristic include: a material property; a shading; a windbreak; a presence of a heat source; a reflectivity, a transmissibility, or an absorptivity of light of any wavelength; a heat capacity; a type or amount of paving; a presence or absence of vegetation; a human or animal population; a shape of an object, a features of a surface, or water.

Optionally, in some embodiments, the one or more microclimate conditions includes one or more of: a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.

Optionally, in some embodiments, the method includes: generating, by the processing element, an alert based to the microclimate condition.

In one embodiment, a computer-readable storage medium, the computer-readable storage medium including instructions that when executed by a processing element, cause the processing element to: receive regional weather data; translate, by utilizing a microclimate model, the regional weather data into a microclimate condition; and generate, by the processing element, an alert based to the microclimate condition. The computer readable medium may be non-transitory, or may be transitory (e.g., an electrical signal transmitted over a wire, or an electromagnetic wave).

Optionally, in some embodiments, the alert includes a mitigation action configured to mitigate the predicted microclimate condition.

### BRIEF DESCRIPTION OF THE DRAWINGS

FIG. 1 is a simplified schematic of an embodiment of a microclimate prediction system
FIG. 2 is a flowchart showing an example of a method of training a microclimate machine learning model of the microclimate prediction system of FIG. 1.
FIG. 3 is a flowchart showing an example of a executing a microclimate machine learning model of the microclimate prediction system of FIG. 1 to predict a microclimate condition.
FIG. 4A is an example of a user interface of a user device of the microclimate prediction system of FIG. 1.
FIG. 4B is an example of an alert displayed by the user interface of the user device of the microclimate prediction system of FIG. 1.
FIG. 5 is a simplified schematic of an embodiment of the microclimate prediction system of FIG. 1.
FIG. 6 is a simplified block diagram of components of a computing system of the microclimate prediction system of FIG. 1.

### DETAILED DESCRIPTION

Embodiments disclosed herein predict microclimate conditions to help warn and mitigate the impacts thereof on people, animals, equipment, and devices. For example, when construction workers are outdoors in extreme heat, they have a specific amount of time to work before taking a break. If the employer fails to take proper steps to ensure employee safety, it can cause illness, lost work or a halt to the operation. Often, companies do not know the extreme conditions in a microclimate, given certain environmental factors. Depending on the area of work, there may be buildings or trees that provide partial/full shade and block the wind, humidity from a reservoir or grassy wetlands, or other external factors that affect the microclimate. In addition, surface characteristics may play a role in the microclimate. Surfaces are able to absorb heat from the sun and then re-radiate it into the microclimate. These surfaces can range from asphalt, concrete, sand, turf, bodies of water, grass, etc. In one example, a regional forecast may be for a sunny day with a high of 92°F. However, a user in a microclimate area within the regional forecast area, may be working outdoors near a reservoir, on asphalt, with no nearby shade (e.g., from trees or buildings). In this example, the asphalt will absorb the heat from the sun throughout the day and then re-radiate it as the day continues, causing higher temperature in the microclimate area than the 92°F regional forecast would predict. Surfaces that absorb heat from the sun can often be very hot to touch and can re-radiate that heat long after the sun has gone down. In addition, the reservoir nearby may add humidity to the working area, increasing the heat exposure index (e.g., the "feels like" temperature). Because of these conditions, the microclimate is different, and more extreme, than the general regional weather forecast.

Weather phenomena are measured at various scales. Synoptic Scale meteorology refers to synoptic events occurring on a scale of thousands of kilometers, such as warm and cold fronts, typically on the order of greater than 1,000 miles (about 1,600 kilometers). Mesoscale meteorology refers to weather systems smaller than synoptic-scale systems but larger than microscale and storm-scale systems. Mesoscale is between 1 and 1,000 miles (about 1.6 and 1,600 kilometers). Storm-scale meteorology is the study of cumulus systems larger than the microscale, but not large enough to be mesoscale systems. For example, cumulonimbus clouds vary in size and can typically range between one mile (about 1.6 kilometers) and 15 miles (24 kilometers). Microscale, microclimate meteorology, or micrometeorology is the study of atmospheric phenomena and conditions smaller than mesoscale, about one kilometers (about 0.6 mi) or less.

Embodiments disclosed herein enable the prediction of local microclimate conditions via a microclimate model given inputs such as synoptic scale, mesoscale, and/or storm scale weather forecast parameters or actual conditions (e.g., temperature, dewpoint, relative humidity, etc.). These may be referred to as regional conditions (e.g., actual weather data, either live or historical), regional predictions ( a forecast of conditions), and/or regional weather data (encompassing both actual conditions and forecasts) throughout this disclosure. A microclimate area may be an area with similar characteristics and weather conditions, e.g., a parking lot or a shaded area of a park. As used herein, a microclimate area characteristic is meant to encompass a physical aspect of the area in which a microclimate occurs (i.e., a microclimate area). Examples of microclimate area characteristics include, but are not limited to, types of materials, shading, windbreaks, the presence of heat sources, reflectivity, transmissibility, and absorptivity of light of any wavelength, heat capacity, type and amount of paving, presence or absence of plants, the shape of objects, features or properties of a surface, nearby water, etc. As used herein, microclimate conditions are meant to encompass local weather conditions within the microclimate area. Examples of microclimate conditions include, but are not limited to, temperature, insolation, wind speed, wind direction, cloud cover, atmospheric pressure, precipitation amount, wind chill, dewpoint, humidity, the atmospheric electrical field, wind shear, accumulated irradiation, or a level of a pollutant.

In some examples, a microclimate area may be an area within about one kilometer (about 0.6 mile) of a certain point and having similar one or more similar characteristics and/or weather conditions. In other examples, a microclimate area may be more compact, such as extending a few hundred feet, or even tens of feet or less, with similar characteristics throughout. A microclimate area may be continuous, or may be fragmented (e.g., one microclimate area separating two separate regions within another microclimate area. Microclimate areas may be static over time, or may shift over time, e.g., as the sun moves through the sky. Additionally or alternately, microclimate area characteristics may shift over time. For example, a microclimate area may receive new pavement that changes its characteristics and therefore its microclimate area characteristics and microclimate conditions.

In some embodiments, a microclimate prediction system receives local weather condition data from the microclimate, or a representative microclimate (i.e., a microclimate area similar to the one for which a prediction is being made.) In some examples, a system includes a trained microclimate model that translates regional weather information into microclimate conditions. The model includes various characteristics of the microclimate area, e.g., shade, materials, and the like, used to predict the likely conditions in the microclimate area.

For example, a microclimate prediction system may calculate a Heat Exposure Index ("HEI") from predicted temperature, humidity, insolation, and wind conditions in the microclimate area based on regional weather data and the microclimate area characteristics. Those conditions can be relayed to a user such as through a user device like a smart phone, etc. For example, a predicted HEI may be 8 (on a 1-10 scale) from about 12:00 pm to 2:00 pm. One reason for this value may be the overhead sun shining on the microclimate area. The land and objects in the microclimate area absorb this energy and re-radiate it as heat into the microclimate area. Later, the wind may pick up from the nearby ocean around 3:00 pm, causing the microclimate area to cool down. This increased wind may reduce the HEI to a value of 3. If a user of a microclimate prediction system is aware of these conditions before they occur, it enables them to be proactive and plan accordingly, such as by changing schedules or taking mitigating actions like turning on fans or misters.

One or more sensors located in the microclimate area may collect the local weather data and transmit it to the microclimate prediction system. For example, if the microclimate area is a parking lot, local weather sensors that measure conditions such as temperature, precipitation, insolation, humidity, etc., may be placed in a parking lot and may feed data to the model, either for the model's creation and/or training, and/or for exercising the model to create outputs such a local microclimate condition predictions.

In some examples, the system may be trained by receiving the local microclimate conditions from the sensors in microclimate area and comparing and correlating that local sensor data with corresponding regional forecast and/or weather condition data (i.e., regional weather data). For example, a parking lot may have a microclimate area defined by the extent and type of asphalt, sun exposure, shelter from wind, etc. This microclimate may have one or more local sensors installed therein that capture microclimate data (e.g., temperature, insolation, wind, precipitation, etc.). The local sensor data, regional weather data, and/or characteristics of the microclimate area (i.e., training data) may be fed into a model such as a machine learning ("ML") model or algorithm. The ML model may be trained with the inputted data and/or characteristics to develop correlations between the local sensor data, regional weather data, microclimate conditions, and the microclimate area characteristics of a microclimate area.

In one specific example, such as where the ML model is a neural net, the training data may be used to develop weightings between "neurons" of the ML model. In some examples, the ML model may be a "digital twin" of the microclimate area. In some examples, a digital twin is a virtual representation of a microclimate area that spans its lifecycle, is updated from real-time data, and uses simulation, machine learning, artificial intelligence, and/or reasoning to help decision making. The digital twin may have a high level of precision in the structure, materials, and other characteristics of the microclimate area. For example a digital twin may not only represent buildings and other major structures in the microclimate area, but may also represent individual plants, vehicles, paint colors, amount and type of glazing in buildings, etc.

The trained model may be used to develop predictions of microclimate conditions in the microclimate area on which it was trained, and also for other microclimate areas with similar characteristics, with or without local sensor data. Continuing the parking lot example, if the ML model is trained on a particular parking lot in Florida, the trained model may be used to predict microclimate conditions in other parking lots with similar microclimate area characteristics (e.g., temperature, insolation, wind, precipitation, etc.) in Florida, and/or in other locations with similar macroclimate characteristics (e.g., elevation, latitude, longitude, level of urbanization, proximity to major bodies of water, etc.). The ML model may also be able to adapt to situations where microclimate area characteristics are dissimilar between two microclimate areas. For example, comparing two different parking lots, one may have newer (and therefore darker pavement) that absorbs heat more readily than an older (and lighter-colored) parking lot. The ML model may adjust its predictions of microclimate conditions based on the color of the pavement and other differences in characteristics.

For example, the model may output the local microclimate conditions such as temperature, humidity, insolation, wind, dew point, heat exposure index, wind chill, etc. that a person in the microclimate may experience. These conditions may be significantly different than the conditions predicted by a national, regional, or even local weather forecast. The system may generate a warning to users of the conditions expected in the microclimate. The system may advise users to take precautions to adapt to the weather, such as taking more frequent breaks, wearing light clothing, or avoiding strenuous activity during parts of the day. Optionally, or additionally, the system may activate one or more actuators to modify the microclimate. For example, the system may turn on fans, water misters, air conditioning or other climate controls. The system may open or close shades, darken window tints (such as with thermochromic windows), to reduce insolation. The system may activate climate controls outside, inside a structure, or near a structure.

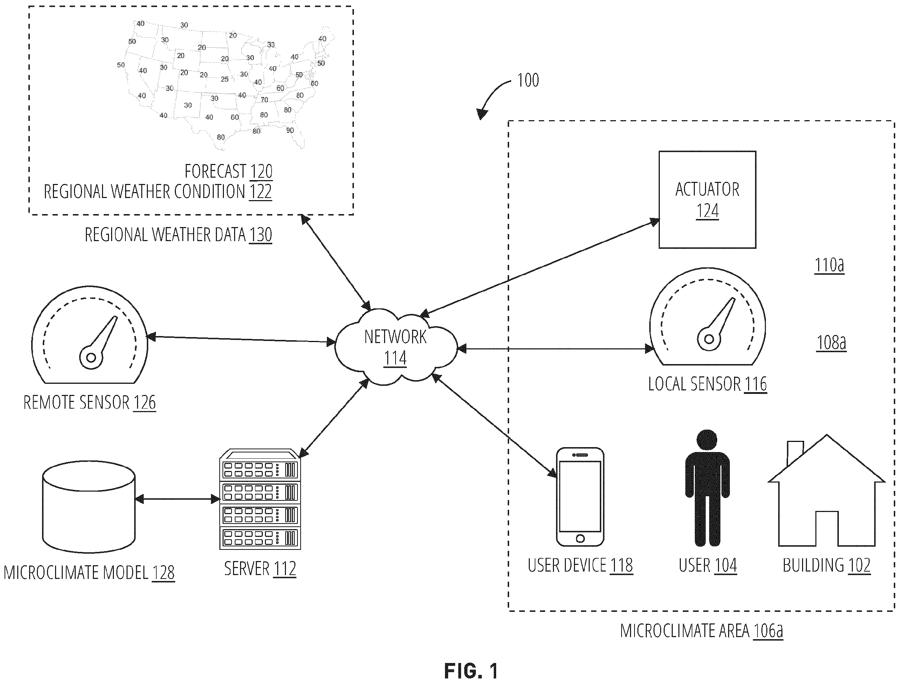

Turning to the figures, FIG. 1 is a schematic of a microclimate prediction system 100. The microclimate prediction system 100 includes a server 112 and a microclimate model 128. In some embodiments, the microclimate prediction system 100 may include a user device 118, a network 114, a local sensor 116, and/or a remote sensor 126.

The user device 118 may be any device capable of communicating with other elements of the microclimate prediction system 100, such as a smart phone, tablet, laptop computer, desktop computer, smart watch, control console, etc. In many examples, the user device 118 may communicate via wired or wireless communications to other elements of the microclimate prediction system 100 through the network 114. In some examples, the user device 118 may communicate directly to other elements without using a network 114.

The network 114 may be implemented using one or more of various systems and protocols for communications between computing devices using either wired or wireless methods. In various embodiments, the network 114 or various portions of the network 114 may be implemented using the Internet, a local area network (LAN), a wide area network (WAN), and/or other networks. In addition to traditional data networking protocols, in some embodiments, data may be communicated according to protocols and/or standards including near field communication (NFC), Bluetooth, cellular connections, Wi-Fi, Zigbee, and the like.

The microclimate prediction system 100 may receive inputs pertaining to a regional area such as a forecast 120 and/or a regional weather condition 122, such as via a network 114. Typically a regional area may extend more than a kilometer and may have many different characteristics throughout. A regional area may typically be, a large area, such as a continent, country, city, state, province, or other broad region up to and including the entire Earth and even space weather. The regional area may include one, or often, many microclimate areas, such as a microclimate area 106a and a microclimate area 106b. The forecast 120 may be a prediction of one or more weather conditions in a regional area, such as generated by the National Weather Service or other entity the predicts weather. The regional weather condition 122 may represent data collected by one or more remote sensors 126, such as a weather station, within the regional area. In other words, a forecast 120 is a prediction of future conditions, whereas a regional weather condition 122 is an actual condition recorded by a remote sensor 126.

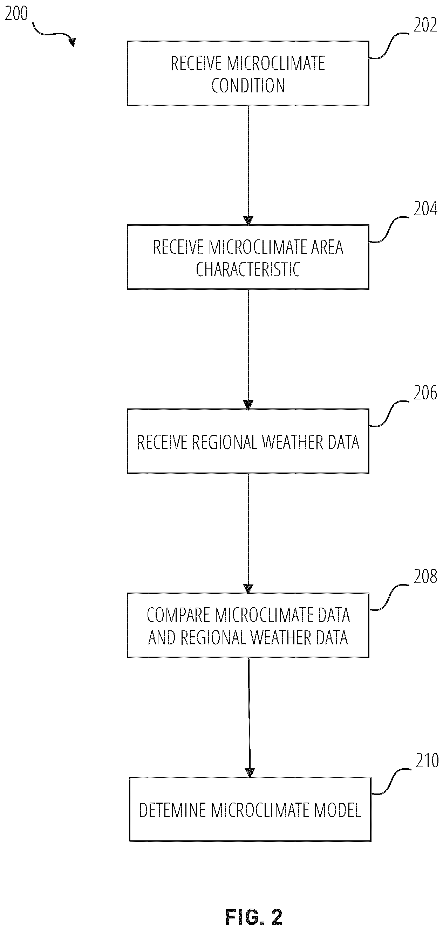

The microclimate prediction system 100 is configured to predict one or more microclimate conditions 108a in the microclimate area 106a. The microclimate prediction system 100 includes a microclimate model 128. The microclimate model 128 may be an ML or artificial intelligence ("AI") model executed by a computing system 600 of the server 112. The microclimate model 128 may be trained to predict one or more microclimate conditions 108a. The training of the microclimate model 128 may be based on the forecast 120, the regional weather condition 122 (including data from a remote sensor 126), data from one or more local sensors 116, and/or characteristics of the microclimate area 106a. Training of the microclimate model 128 is discussed in more detail with respect to FIG. 2 and the method 200.

In one example, the microclimate area 106a may include a building 102, The building 102 could be a home, a retail location, an office building, a sky scraper, an apartment building, an amusement park ride, a commercial building like a factory, plant, warehouse, or distribution center, etc. In a simple example, for the sake of illustration only, the building 102 may be a house with one microclimate on a sunny side (e.g., south side in the northern hemisphere) and another microclimate area on a shady (e.g., north side), where a defining microclimate area characteristic of each microclimate area is the amount of shading the area receives. The microclimate area characteristic of "shading" affects many of the microclimate conditions in each respective microclimate area (e.g., insolation, temperature, etc.). Similarly, the example building may have additional microclimate areas on the east and west sides of the building, respectively or even in the building.

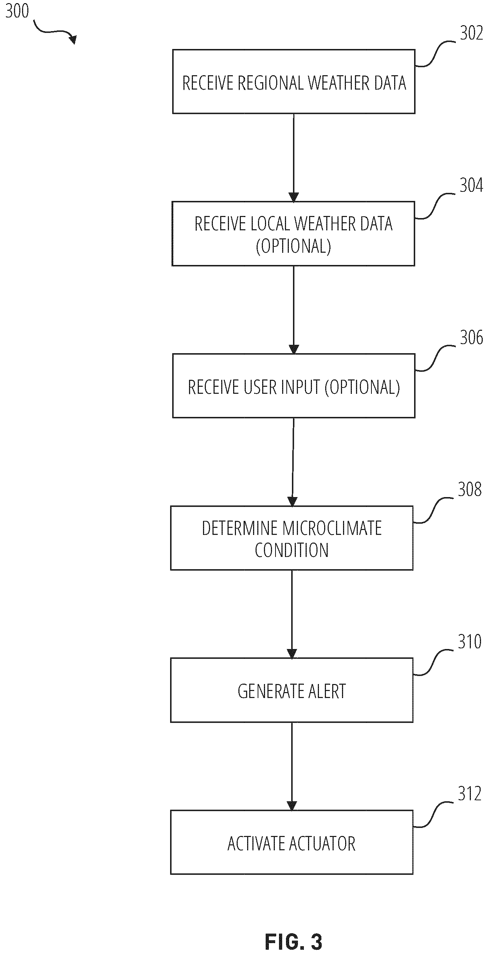

In operation, the microclimate prediction system 100 may receive various inputs such as a forecast 120, regional weather condition 122, and optionally, data from a remote sensor 126 and/or a local sensor 116. In many examples, the microclimate prediction system 100 makes its prediction based on the forecast 120 and/or the regional weather condition 122 without any data from a local sensor 116. The microclimate prediction system 100 may, based on the inputs, determine one or more predicted microclimate conditions 108a. Some nonlimiting examples of a microclimate condition 108a include: a temperature, an insolation, a wind speed, a wind direction, a cloud cover, an atmospheric pressure, a precipitation amount, a wind chill, a dewpoint, a humidity, an atmospheric electrical field, a wind shear, an accumulated irradiation, a heat exposure index, a wind chill, or a level of a pollutant. Operation of the microclimate prediction system 100 is discussed in more detail with respect to FIG. 3 and the method 300.

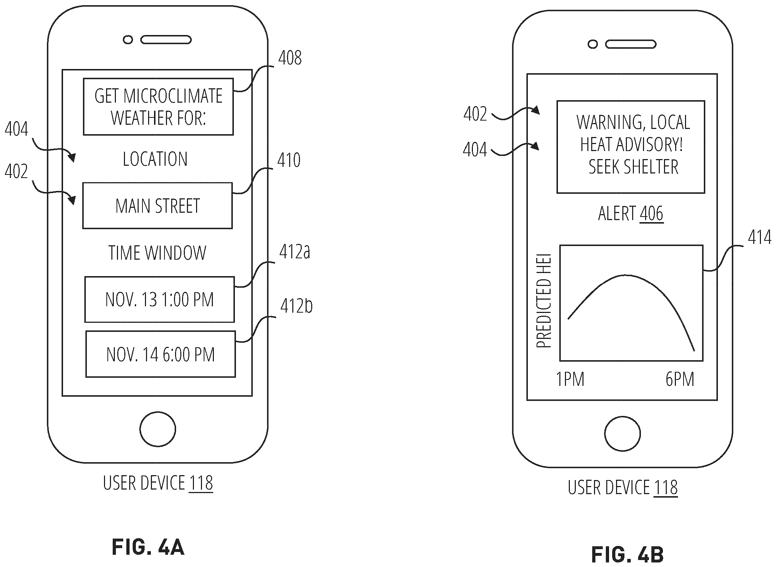

The microclimate prediction system 100 may generate an alert (see, e.g., FIG. 4B) based on the microclimate condition 108a. For example, if the microclimate prediction system 100 predicts that a heat exposure index in the microclimate area 106a may be uncomfortable to people (such as a user 104) and/or animals in the microclimate area 106a, the microclimate prediction system 100 may transmit the alert to a device associated with a user 104, such as a user device 118. The alert may warn the user 104 to take precautions against the microclimate condition 108a.

In some examples, the microclimate prediction system 100 may include, or be in communication with, an actuator 124. An actuator 124 may be substantially any device or system adapted to modify the microclimate condition 108a. The microclimate prediction system 100 may activate an actuator 124 to affect the microclimate condition 108a. For example, the microclimate prediction system 100 may activate a fan or mister in the microclimate area 106a (e.g., a yard of the building 102) to attempt to modify the intensity of the microclimate condition 108a. In another example, the microclimate prediction system 100 may turn on a climate control system of the building 102 or a vehicle to attempt to modify the intensity of the microclimate condition 108a.

Although the preceding examples deal with extreme heat as a microclimate condition, the disclosure is also applicable to microclimate conditions related to cold, wind, precipitation, wildfires (and wildfire smoke), ultraviolet exposure, volcanic activity, hurricanes, tornadoes, earthquakes, tsunamis, and other weather or geologic phenomena.

FIG. 2 illustrates an example of a method 200 for training a microclimate model 128 of the microclimate prediction system 100. Although the example method 200 depicts a particular sequence of operations, the sequence may be altered without departing from the scope of the present disclosure. For example, some of the operations depicted may be performed in parallel or in a different sequence that does not materially affect the function of the method 200. In some examples, the method 200 may be executed by a single device, while in other examples, the method 200 may be distributed across different devices (e.g., server 112, the user device 118, the remote sensor 126, and/or the local sensor 116) with each device performing a part or all of the method 200. In some examples, the method 200 may be executed by different components of an example device of the microclimate prediction system 100 that implements the method 200. In some examples, the operations of the method 200 may be performed at substantially the same time or in a specific sequence.

The method 200 begins by the microclimate prediction system 100 receiving microclimate data at operation 202. The microclimate data may include information about one or more microclimate conditions in a microclimate area, such as the microclimate area 106a. The microclimate conditions may be received or generated by one or more local sensors 116. Local sensors 116 may measure microclimate conditions such as temperature, HEI, insolation, wind speed, wind direction, cloud cover, atmospheric pressure, precipitation amount, wind chill, dewpoint, humidity, atmospheric electrical field, wind shear, accumulated irradiation, or a level of a pollutant, etc. For example, the microclimate prediction system 100 may receive pollutant data such as an amount of particulate matter (e.g., soot, smoke, dust, etc.), a nitrogen and oxygen compound (e.g., NO or NO₂), a sulfur compound, ozone, a hydrocarbon, carbon dioxide, or carbon monoxide, etc. In some examples, the data related to the microclimate conditions may be received by the server 112, either through a direct connection to the local sensors 116, or via the network 114. In some examples, the microclimate conditions are live or near-live conditions, while in other examples, the microclimate conditions are historical.

The method 200 may proceed to operation 204 and the microclimate prediction system 100 receives one or more microclimate area characteristics. For example, the microclimate prediction system 100 may receive data related to: the size, topography; and/or shape of the microclimate area 106a; number and types of buildings or other structures; the types or properties of materials of any objects or structures; shading; windbreaks; the presence of heat sources; reflectivity, transmissibility, and absorptivity of light of any wavelength; heat capacity; type and amount of paving; presence or absence of plants; the shape of objects; features or properties of a surface; nearby water; population of humans and/or animals and/or their likely activities; etc. In some examples, the data related to the microclimate area characteristics may be received by the server 112, either through a direct connection, or via the network 114.

The method 200 may proceed to operation 206 and the microclimate prediction system 100 receives regional weather data 130. As discussed, the regional weather data 130 may include either or both a regional forecast 120 (e.g., predictions of future weather) and/or a regional weather condition 122 (e.g., actual conditions, either in real-time or historical). For example, the microclimate prediction system 100 may receive a regional weather condition 122 from a public service (e.g., the U.S. National Weather Service or a corresponding national weather service of any country or region), a private service or both. Historical regional weather conditions 122 may be received from weather or climate archives maintained by an organization such as the U.S. National Oceanic and Atmospheric Administration, and/or similar governmental or private organizations. The regional weather data 130 may be received by the server 112 of the microclimate prediction system 100 via the network 114 such as through an application program interface , a manual download of data, or other suitable methods. The regional weather data 130 may be received in real time, near real time, or historically. The regional weather data 130 may be developed using remote sensors 126 that measure any aspect of weather, including satellite or terrestrial sensors, and radar, sonar, and the like.

The method 200 may proceed to operation 208 and the microclimate prediction system 100 compares the microclimate data with the regional weather data 130 for given microclimate conditions. For example, in the operation 208, the server 112 or other computing system 600 may compare the regional weather data 130 with the local sensor 116 data, accounting for the microclimate area characteristics 110a to find correlations therebetween. The operation 208 may use many sets of data at any time of day, through a year, and/or over a span of days, weeks, months, years, decades, and/or centuries.

The method 200 may proceed to operation 210 and the microclimate prediction system 100 determines the microclimate model 128. For example, in cases where the microclimate model 128 is a neural net, the microclimate prediction system 100 may develop weighting data for neurons of the neural net based on the comparison and correlation performed in the operation 208. The microclimate prediction system 100 may use the microclimate model 128, for example as described with respect to the method 300 to predict one or more microclimate conditions 108a. In some examples, the microclimate model 128 represents a digital twin of the microclimate area. In some examples, the digital twin includes a multi-physics model of the microclimate area representing heat generation and flow, fluid dynamics (e.g., wind and water) simulations, thermodynamics, traffic movement (e.g., of people, animals, and/or vehicles), optics (e.g., raytracing of sunlight and reflections thereof), three-dimensional solid and/or surface modeling, etc.

FIG. 3, FIG. 4A, and FIG. 4B illustrate an example of a method 300 for predicting a microclimate condition 108a using the microclimate prediction system 100. Although the example method 300 depicts a particular sequence of operations, the sequence may be altered without departing from the scope of the present disclosure. For example, some of the operations depicted may be performed in parallel or in a different sequence that does not materially affect the function of the method 300. In some examples, the method 300 may be executed by a single device, while in other examples, the method 300 may be distributed across different devices (e.g., server 112, the user device 118, the remote sensor 126, and/or the local sensor 116) with each device performing a part or all of the method 300. In some examples, the method 300 may be executed by different components of an example device of the microclimate prediction system 100 that implements the method 300. In some examples, the operations of the method 300 may be performed at substantially the same time or in a specific sequence.

The method 300 may begin in operation 302 and the microclimate prediction system 100 receives regional weather data 130. The operation 302 may be substantially similar to the operation 206 described herein, but with an emphasis on live or near-live regional weather data 130 (e.g., both live conditions and forecasts 120). For example, in the operation 302, the microclimate prediction system 100 may receive regional weather data 130 for one or more regions that contain a particular microclimate area 106a of interest. In some examples, the microclimate prediction system 100 may receive regional weather data 130 for regions that may affect the microclimate area 106a. For example, if the microclimate area 106a is in Florida, the microclimate prediction system 100 may receive regional weather data 130 for Florida, but may also receive regional weather data 130 for regions to the East of Florida, such as Texas, California, other states that border the Gulf of Mexico, etc. The global jet stream which tends to blow West-to-East will tend to carry regional weather from these areas to Florida over time. Similarly, as Florida is often affected by weather originating in the Atlantic ocean (e.g., tropical depressions, storms, and hurricanes), the microclimate prediction system 100 may also receive regional weather data 130 for those regions.

The method 300 may continue to operation 304 and the microclimate prediction system 100 receives microclimate conditions, e.g., from one or more local sensors 116. In some examples, the operation 304 is optional and the microclimate prediction system 100 operates without any input from local sensors 116. In many examples, the operation 304 is substantially similar to the operation 202, but with an emphasis on live, real-time, or near real time microclimate conditions.

The method 300 may continue to operation 306 and the microclimate prediction system 100 receives user input, e.g., from a user device 118. As shown for example in FIG. 4A, the user device 118 may execute an application 402 that displays a user interface 404. The user interface 404 may display a prompt 408 that notifies the user 104 that the application 402 is requesting data from the user 104. The user interface 404 may also include one or more inputs such as a location input 410 and one or more time inputs 412a, b. In the example shown in FIG. 4A, a user 104 is requesting that the microclimate prediction system 100 predict the microclimate conditions for an area called "Main Street" (e.g., via the location input 410) for times between 1 PM on Nov. 13 and 6 PM on Nov. 14 (e.g., via the time input 412a and time input 412b, respectively). The user device 118 may transmit the user request to the server 112, such as via the network 114, and the server 112 may determine the microclimate condition during the requested times and days using the microclimate model 128. In some examples, the operation 306 is optional and the microclimate prediction system 100 may generate predictions of a microclimate condition on an ongoing or scheduled basis.

The method 300 may continue to operation 308 and the microclimate prediction system 100 determines a microclimate condition. For example, the microclimate prediction system 100 may input data received in the operation 302 and optionally the operation 304, and/or the user request received in operation 306 into the microclimate model 128. The microclimate model 128 analyzes the regional weather data and one or more microclimate area characteristics of a microclimate area to translate the regional weather data into the microclimate condition for the microclimate area. For example, the predicted microclimate condition may be one or more of a temperature, HEI, insolation, wind speed, wind direction, cloud cover, atmospheric pressure, precipitation amount, wind chill, dewpoint, humidity, atmospheric electrical field, wind shear, accumulated irradiation, or a level of a pollutant such as an amount of particulate matter (e.g., soot, smoke, dust, etc.), a nitrogen and oxygen compound (e.g., NO or NO₂), a sulfur compound, ozone, a hydrocarbon, carbon dioxide, or carbon monoxide, etc.

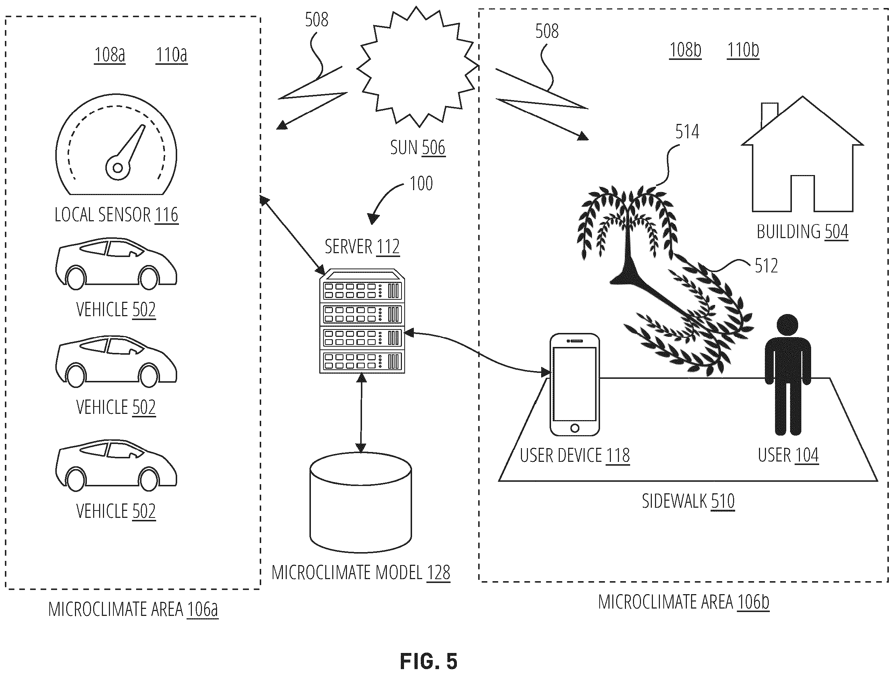

The microclimate condition may be for a microclimate area on which the microclimate model 128 was trained, or may be a different microclimate area (e.g., as discussed with respect to FIG. 5). The microclimate condition may be for the current time (e.g., a real-time determination of a condition in the microclimate area 106a). Alternately, or additionally, the microclimate condition may be a forecast for a microclimate condition sometime in the future, such as a few minutes ahead of the current time, hour ahead, several hours, several days, weeks, or months. The forecast microclimate condition may correspond to a certain event, such as sunset, sunrise, etc. In some examples, a user 104 may request that the microclimate prediction system 100 predict the microclimate condition for a desired time and/or day. For example, if the user 104 is in charge of an outdoor performance, sporting event, or other activity scheduled to start at 1 PM on Nov. 13, the user 104 may request that the microclimate prediction system 100 predict the microclimate condition for the time of the event, e.g., as discussed with respect to the operation 306 and FIG. 4A.

The method 300 may continue to operation 312 and the microclimate prediction system 100 generates an alert related to the microclimate condition. See, e.g., FIG. 4B. For example, the server 112 may generate an alert 406 message based on the microclimate model 128 prediction of the microclimate condition 108a. The server 112 may transmit the alert 406 to the user device 118 which may display the alert via the user interface 404. In the example shown in FIG. 4B, the alert 406 says, "Warning, local heat advisory. Seek shelter." In some examples, the alert 406 may include data such as predicted values for one or more microclimate conditions, such as temperature, HEI, humidity, insolation, wind, etc. These conditions may be presented in a chart 414 or tabular form (e.g., versus time), as shown for example in FIG. 4B. In some examples, the alert 406 may be displayed on dynamic signage, such as above roadways, streets, in queues at an amusement park ride, or at facilities.

The method 300 may continue to operation 310 and the microclimate prediction system 100 activates one or more actuators to help mitigate an adverse microclimate condition. For example, the microclimate prediction system 100 may activate one or more actuators 124, such as to turn on a fan, air conditioners, heater, mister, close window shades or turn on thermochromic windows, or other climate controls. The operation 310 may happen automatically with, or without, an alert being generated in the operation 308. The microclimate prediction system 100 may gradually activate actuators 124 taking more aggressive action if microclimate conditions do not stabilize or return to acceptable values. The microclimate prediction system 100 may turn off the actuators 124 when the microclimate conditions are acceptable, after an event (e.g., sunset, the end of a work day, on a schedule, etc.).

Using the microclimate prediction system 100,the method 200, and method 300, the user may make plans to accommodate for, or otherwise mitigate, undesirable or uncomfortable microclimate conditions.

With reference to FIG. 5, the microclimate prediction system 100 may be configured to predict microclimate conditions 108b in one microclimate area 106b (e.g., a pedestrian area with a sidewalk 510, one or more buildings 504, objects 514, shade 512 from the objects 514 or buildings 102) based on training data from a microclimate area 106a (e.g., a parking lot with one or more vehicles 502) different than the microclimate area 106b. In the example shown, the microclimate prediction system 100 may have been trained, at least partly, on local sensor 116 data from the parking lot microclimate area 106a such as described with respect to the method 200. The microclimate area 106a and microclimate area 106b may be exposed to similar or different insolation 508 from the sun 506. Based on differences between the microclimate area characteristic 110a and the microclimate area characteristic 110b of the respective microclimate area 106a and the microclimate area 106b, the microclimate prediction system 100 may predict the local microclimate conditions 108b in the microclimate area 106b. For example, the microclimate model 128 may account for differences in shade, vegetation, pavement, presence or absence of cars, population of people and their activities (e.g., walking, queueing, etc.) between the microclimate area 106a and the microclimate area 106b. In some examples, the microclimate area 106a may include one or more local sensors 116 that the microclimate prediction system 100 uses (e.g., in operation 304) to aid in the prediction of the microclimate conditions in the microclimate area 106b. These data may help inform the determination of the microclimate conditions in the microclimate area 106b, even though the local sensors 116 are not located in the microclimate area 106b. Thus, the microclimate prediction system 100 may be easily adapted to many different microclimate areas without the need to instrument each one with local sensors 116, thereby reducing cost and speeding the timeline and increasing the scale of the deployment of the microclimate prediction systems 100 for the benefit of users 104 as disclosed herein.

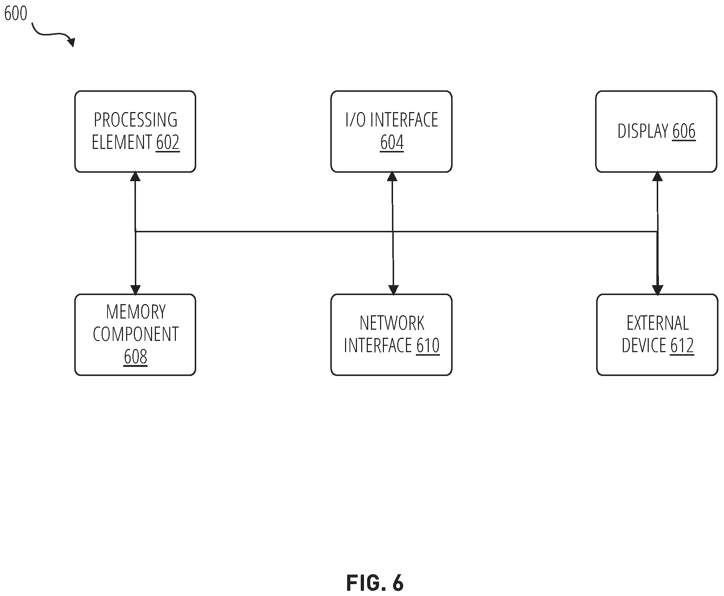

FIG. 6 is a simplified block diagram of components of a computing system 600 of the microclimate prediction system 100, such as the server 112, a local sensor 116, the user device 118, a remote sensor 126, etc. For example, the processing element 602 and the memory component 608 may be located at one or in several computing systems 600. This disclosure contemplates any suitable number of such computing systems 600. For example, the server 112 may be a desktop computing system, a mainframe, a blade, a mesh of computing systems 600, a laptop or notebook computing system 600, a tablet computing system 600, an embedded computing system 600, a system-on-chip, a single-board computing system 600, or a combination of two or more of these. Where appropriate, a computing system 600 may include one or more computing systems 600; be unitary or distributed; span multiple locations; span multiple machines; span multiple data centers; or reside in a cloud, which may include one or more cloud components in one or more networks. A computing system 600 may include one or more processing elements 602, an input/output I/O interface 604, one or more external devices 612, one or more memory components 608, and a network interface 610. Each of the various components may be in communication with one another through one or more buses or communication networks, such as wired or wireless networks, e.g., the network 114. The components in FIG. 6 are exemplary only. In various examples, the computing system 600 may include additional components and/or functionality not shown in FIG. 6.

The processing element 602 may be any type of electronic device capable of processing, receiving, and/or transmitting instructions. For example, the processing element 602 may be a central processing unit, microprocessor, processor, or microcontroller. Additionally, it should be noted that some components of the computing system 600 may be controlled by a first processing element 602 and other components may be controlled by a second processing element 602, where the first and second processing elements may or may not be in communication with each other.

The I/O interface 604 allows a user to enter data in to computing system 600, as well as provides an input/output for the computing system 600 to communicate with other devices or services. The I/O interface 604 can include one or more input buttons, touch pads, touch screens, and so on.

The external device 612 are one or more devices that can be used to provide various inputs to the computing systems 600, e.g., mouse, microphone, keyboard, trackpad, sensing element (e.g., a thermistor, humidity sensor, light detector, etc. The external devices 612 may be local or remote and may vary as desired. In some examples, the external devices 612 may also include one or more additional sensors.

The memory components 608 are used by the computing system 600 to store instructions for the processing element 602 such as the microclimate model 128, the application 402 and/or user interface 404, as well as store data, such as regional weather data 130, microclimate conditions, microclimate area characteristics, user preferences, alerts, etc. The memory components 608 may be, for example, magneto-optical storage, read-only memory, random access memory, erasable programmable memory, flash memory, or a combination of one or more types of memory components.

The network interface 610 provides communication to and from the computing system 600 to other devices. The network interface 610 includes one or more communication protocols, such as, but not limited to Wi-Fi, Ethernet, Bluetooth, etc. The network interface 610 may also include one or more hardwired components, such as a Universal Serial Bus (USB) cable, or the like. The configuration of the network interface 610 depends on the types of communication desired and may be modified to communicate via Wi-Fi, Bluetooth, etc.

The display 606 provides a visual output for the computing system 600 and may be varied as needed based on the device. The display 606 may be configured to provide visual feedback to the user 104 and may include a liquid crystal display screen, light emitting diode screen, plasma screen, or the like. In some examples, the display 606 may be configured to act as an input element for the user 104 through touch feedback or the like.

Any description of a particular component being part of a particular embodiment, is meant as illustrative only and should not be interpreted as being required to be used with a particular embodiment or requiring other elements as shown in the depicted embodiment.

All relative and directional references (including top, bottom, side, front, rear, and so forth) are given by way of example to aid the reader's understanding of the examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

The present disclosure teaches by way of example and not by limitation. Therefore, the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall there between.

Aspects and features of the present disclosure are set out in the following numbered clauses.
1. A method of predicting a microclimate condition comprising:
   receiving, by a processing element, regional weather data;
   translating, by the processing element by utilizing a microclimate model, the regional weather data into the microclimate condition; and
   generating, by the processing element, an alert based to the microclimate condition.
2. The method of clause 1, wherein the microclimate model analyzes the regional weather data and one or more microclimate area characteristics of a microclimate area to translate the regional weather data into the microclimate condition for the microclimate area.
3. The method of clause 2, wherein the one or more microclimate area characteristic comprise:
   a material property; a shading; a windbreak; a presence of a heat source; a reflectivity, a transmissibility, or an absorptivity of light of any wavelength; a heat capacity; a type or amount of paving; a presence or absence of vegetation; a human or animal population; a shape of an object, a features of a surface, or water.
4. The method of clause 1, wherein the material property comprises a surface property.
5. The method of clause 1, wherein the one or more microclimate conditions comprises one or more of:
   a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.
6. The method of clause 5, wherein the pollutant is one or more of: an amount of a particulate matter, a nitrogen and oxygen compound, a sulfur compound, ozone, a hydrocarbon, carbon dioxide, or carbon monoxide.
7. The method of clause 1, wherein the alert comprises a mitigation action configured to mitigate the predicted microclimate condition.
8. The method of clause 1, wherein the alert comprises a message configured to be displayed on a user device.
9. The method of clause 1, wherein the regional weather data comprises at least one of a forecast or a regional weather condition.
10. The method of clause 9, wherein the regional weather condition comprises one or more of:
   a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.
11. The method of clause 9, wherein the regional weather condition comprises a real time or near real-time condition.
12. The method of clause 9, wherein the regional weather condition comprises a historical condition.
13. The method of clause 2, further comprising:
   receiving, by the processing element, local weather data from a sensor located in the microclimate area;
   modifying the microclimate model, by the processing element, based on the local weather data.
14. The method of clause 1, wherein the microclimate model comprises an artificial intelligence or machine learning algorithm.
15. A method of training a microclimate machine learning model comprising:
   receiving a regional weather data for a microclimate environment;
   detecting one or more microclimate conditions via one or more sensors positioned within the microclimate environment;
   determining one or more microclimate area characteristic of the microclimate environment at the time of the detected one or more microclimate conditions;
   generating the microclimate machine learning model based on the regional weather data, the one or more microclimate conditions, and the one or more microclimate area characteristic.
16. The method of clause 15, wherein the one or more microclimate area characteristic comprise:
   a material property; a shading; a windbreak; a presence of a heat source; a reflectivity, a transmissibility, or an absorptivity of light of any wavelength; a heat capacity; a type or amount of paving; a presence or absence of vegetation; a human or animal population; a shape of an object, a features of a surface, or water.
17. The method of clause 15, wherein the one or more microclimate conditions comprises one or more of:
   a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.
18. The method of clause 15, further comprising:
   generating, by the processing element, an alert based to the microclimate condition.
19. A non-transitory computer-readable storage medium, the computer-readable storage medium including instructions that when executed by a processing element, cause the processing element to:
   receive regional weather data;
   translate, by utilizing a microclimate model, the regional weather data into a microclimate condition; and
   generate, by the processing element, an alert based to the microclimate condition.
20. The method of clause 19, wherein the alert comprises a mitigation action configured to mitigate the predicted microclimate condition.

## Claims

1. A method of predicting a microclimate condition comprising:
receiving, by a processing element, regional weather data;
translating, by the processing element by utilizing a microclimate model, the regional weather data into the microclimate condition; and
generating, by the processing element, an alert based to the microclimate condition.

2. The method of claim 1, wherein the microclimate model analyzes the regional weather data and one or more microclimate area characteristics of a microclimate area to translate the regional weather data into the microclimate condition for the microclimate area.

3. The method of claim 2, wherein the one or more microclimate area characteristic comprise:
a material property; a shading; a windbreak; a presence of a heat source; a reflectivity, a transmissibility, or an absorptivity of light of any wavelength; a heat capacity; a type or amount of paving; a presence or absence of vegetation; a human or animal population; a shape of an object, a features of a surface, or water,
optionally wherein the material property comprises a surface property.

4. The method of any of claims 2 to 3, further comprising:
receiving, by the processing element, local weather data from a sensor located in the microclimate area;
modifying the microclimate model, by the processing element, based on the local weather data.

5. The method of any preceding claim, wherein the one or more microclimate conditions comprises one or more of:
a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant,
optionally wherein the pollutant is one or more of: an amount of a particulate matter, a nitrogen and oxygen compound, a sulfur compound, ozone, a hydrocarbon, carbon dioxide, or carbon monoxide.

6. The method of any preceding claim, wherein the alert comprises at least one of:
a mitigation action configured to mitigate the predicted microclimate condition; or
a message configured to be displayed on a user device.

7. The method of any preceding claim, wherein the regional weather data comprises at least one of a forecast or a regional weather condition.

8. The method of claim 7, wherein the regional weather condition comprises one or more of:
a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.

9. The method of any of claims 7 to 8, wherein the regional weather condition comprises a real time or near real-time condition, or the regional weather condition comprises a historical condition.

10. The method of any preceding claim, wherein the microclimate model comprises an artificial intelligence or machine learning algorithm.

11. A method of training a microclimate machine learning model comprising:
receiving a regional weather data for a microclimate environment;
detecting one or more microclimate conditions via one or more sensors positioned within the microclimate environment;
determining one or more microclimate area characteristic of the microclimate environment at the time of the detected one or more microclimate conditions;
generating the microclimate machine learning model based on the regional weather data, the one or more microclimate conditions, and the one or more microclimate area characteristic.

12. The method of claim 11, wherein the one or more microclimate area characteristic comprise:
a material property; a shading; a windbreak; a presence of a heat source; a reflectivity, a transmissibility, or an absorptivity of light of any wavelength; a heat capacity; a type or amount of paving; a presence or absence of vegetation; a human or animal population; a shape of an object, a features of a surface, or water.

13. The method of any of claims 11 to 12, wherein the one or more microclimate conditions comprises one or more of:
a temperature, a heat exposure index, an insolation, a wind speed, a wind direction, a cloud cover, an atmospheric pressure, a precipitation amount, a wind chill, a dewpoint, a humidity, an atmospheric electrical field, a wind shear, an accumulated irradiation, or a level of a pollutant.

14. The method of any preceding claim, further comprising:
activating one or more actuators configured to mitigate the one or more microclimate conditions, the activating optionally comprising at least one of turning on a fan, turning on a mister, turning on an air conditioner, turning on a heater, turning on thermochromic windows, opening shades, or closing shades.

15. A processing element configured to perform the method of any preceding claim, or a computer-readable storage medium including instructions that, when executed by a processing element, cause the processing element to perform the method of any preceding claim.
